# EUROPÄISCHE PATENTSCHRIFT

(11) **EP 2 824 433 B1**
(45) Veröffentlichungstag und Bekanntmachung des Hinweises auf die Patenterteilung: **22.02.2017**
(21) Anmeldenummer: 14175723.7
(22) Anmeldetag: 04.07.2014
(51) Int. Cl.: G01F 23/284, G01F 1/00, G01F 1/66

(54) **Universelle Messdatenerfassung in Gewässern**
Universal detection of measurement data in bodies of water
Dispositif de détermination de données de mesure universel dans des eaux

(30) Priorität: 08.07.2013 DE 102013213345
(43) Veröffentlichungstag der Anmeldung: 14.01.2015
(73) Patentinhaber: VEGA Grieshaber KG, 77709 Wolfach (DE)
(72) Erfinder: Skowaisa, Jürgen, 77761 Schiltach (DE)
(74) Vertreter: Maiwald Patentanwalts GmbH

(56) Entgegenhaltungen:
- DE-A1-102010 044 182
- US-A- 5 811 688

## Beschreibung

### Gebiet der Erfindung

Die Erfindung betrifft die Messdatenerfassung in Gewässern. Insbesondere betrifft die Erfindung ein Füllstandmessgerät zur Bestimmung einer Distanz zu einem Medium sowie einer Fließgeschwindigkeit des Mediums durch Auswertung eines von dem Füllstandmessgerät abgestrahlten und von dem Medium reflektierten Sendesignals, ein Verfahren, ein Programmelement und ein computerlesbares Medium. US5811688A und DE102010044182 A1 beschreiben im Stand der Technik übliche Füllstandsmessgeräte.

### Hintergrund

Bei der Überwachung von Gewässern sind verschiedene physikalische Messwerte von Bedeutung. Diese Daten können der statistischen Auswertung und als Grundlage für Planungen von baulichen Maßnahmen, als Hochwasserwarnung oder im Abwasserbereich zur Umlegung der Abwasserbehandlungskosten dienen.

In vielen Fällen ist es interessant, einen möglichst kompakten Sensor für die Erfassung von verschiedenen Messdaten zu verwenden. Zum gegenwärtigen Zeitpunkt sind Messsysteme bekannt, welche die Daten von verschiedenen Sensoren verwenden, welche in getrennten Auswertesystemen gesammelt und ausgewertet werden.

Bei der Messung von Wasserpegeln setzt sich die Radartechnik immer mehr durch, da sie gegenüber anderen Messprinzipien, wie z. B. Ultraschall, von Umwelteinflüssen, wie Temperatur, Wind oder Regen, nicht oder nur geringfügig beeinflusst wird.

### Zusammenfassung der Erfindung

Es ist eine Aufgabe der Erfindung, eine alternative Bestimmung von Gewässerpegelständen und Fließgeschwindigkeiten des Gewässers anzugeben.

Diese Aufgabe wird durch die Merkmale der unabhängigen Patentansprüche gelöst. Weiterbildungen der Erfindung ergeben sich aus den Unteransprüchen und der nachfolgenden Beschreibung.

Gemäß einer ersten Ausführungsform der Erfindung ist ein freistrahlendes Messgerät zur Bestimmung einer Distanz zu einem Medium, aus der man dann den Pegelstand des Mediums bestimmen kann, sowie einer Fließgeschwindigkeit des Mediums durch Auswertung eines von dem Messgerät abgestrahlten und von dem Medium reflektierten Sendesignals angegeben. Das Messgerät weist ein Signalerzeugungsmodul, eine Antennenanordnung und eine Prozessoreinheit auf.

Das Signalerzeugungsmodul dient der Erzeugung des Sendesignals, welches während eines ersten Zeitintervalls eine Amplitudenmodulation oder eine Frequenzmodulation aufweist und welches während eines zweiten Zeitintervalls keine solche Modulation aufweist.

Beispielsweise kann das Sendesignal während des ersten Zeitintervalls in Form eines frequenzmodulierten kontinuierlichen Wellensignals (FMCW: Frequency Modulated Continuous Wave) abgestrahlt werden. Alternativ kann das Sendesignal während dieses ersten Zeitintervalls in Form eines Messpulses abgestrahlt werden. Während des zweiten Zeitintervalls kann es dann als kontinuierliches Wellensignal (CW: Continuous Wave) abgestrahlt werden.

Zum Abstrahlen des Sendesignals ist eine Antennenanordnung vorgesehen, welche das Signal zumindest in eine erste Richtung schräg zur Fließrichtung des Mediums abstrahlen kann.

Die Prozessoreinheit dient der Bestimmung der Distanz zum Medium, aus welcher sich der Pegelstand des Mediums berechnen lässt, sowie der Fließgeschwindigkeit des Mediums durch Auswertung des von dem Medium reflektierten und von der Antennenanordnung aufgenommenen Sendesignals.

Gemäß einer Ausführungsform der Erfindung ist die Antennenanordnung zum Abstrahlen des Sendesignals in eine zweite Richtung, die senkrecht zur Fließrichtung des Mediums ist, ausgeführt. In anderen Worten kann das Sendesignal in zwei verschiedene Richtungen abgestrahlt werden.

Gemäß einer weiteren Ausführungsform der Erfindung ist die Antennenanordnung eine einzelne Antenne mit zwei oder mehr Abstrahlrichtungen, beispielsweise eine Patchantenne oder ein Antennenarray.

Gemäß einer weiteren Ausführungsform der Erfindung weist die Antennenanordnung eine erste Antenne und eine zweite Antenne auf, wobei die erste Antenne zum Abstrahlen des Sendesignals in die erste Richtung und die zweite Antenne zum Abstrahlen des Sendesignals in die zweite Richtung ausgeführt ist.

Die zwei Antennen können beispielsweise über einen Richtkoppler, einen Umschalter oder eine Leistungssplitter an das Signalerzeugungsmodul angeschlossen sein.

Auch kann vorgesehen sein, dass sich die Antennenanordnung gegenüber einem Gehäusebereich des Messgeräts, der zur Befestigung des Messgeräts an einem Träger vorgesehen ist, drehen lässt, so dass sich die Antennenanordnung stets optimal zur Fließrichtung des Gewässers ausrichten lässt, ohne dass hierfür der Grundkörper des Messgeräts ausgerichtet werden muss.

Gemäß einer weiteren Ausführungsform der Erfindung ist das Signalerzeugungsmodul ein Hochfrequenzmodul, beispielsweise ein FMCW-Modul, welches das frequenzmodulierte Sendesignal in Form eines FMCW-Signals während des ersten Zeitintervalls erzeugt, und welches das unmodulierte Sendesignal in Form eines CW-Signals während des zweiten Zeitintervalls erzeugt.

Es wird also abwechselnd entweder ein FMCW-Signal oder ein CW-Signal erzeugt.

Gemäß einer weiteren Ausführungsform der Erfindung ist das Füllstandmessgerät ausgeführt, das Sendesignal während des ersten Zeitintervalls nur in die erste Richtung und das Sendesignal während des zweiten Zeitintervalls nur in die zweite Richtung abzustrahlen.

Gemäß einer weiteren Ausführungsform der Erfindung ist die Prozessoreinheit zur Bestimmung der Distanz zum Medium sowie der Fließgeschwindigkeit des Mediums innerhalb eines einzigen Messzyklus ausgeführt.

Es ist zu berücksichtigen, dass es in allen Ausführungsformen der Erfindung vorgesehen sein kann, dass das Sendesignal, unabhängig davon, ob es senkrecht zur Fließrichtung des Mediums und/oder schräg zur Fließrichtung des Mediums abgestrahlt wird, von demselben Signalerzeugungsmodul erzeugt wird. Insbesondere kann auch vorgesehen sein, dass die empfangenen, reflektierten Sendesignale von derselben Prozessoreinheit ausgewertet werden. Aus dem in die erste Richtung abgestrahlten Sendesignal kann nach dessen Reflexion an der Oberfläche des Füllmediums die Distanz bestimmt werden und aus dem in die zweite Richtung abgestrahlten Sendesignal die Fließgeschwindigkeit des Mediums.

Die Bestimmung der Fließgeschwindigkeit und der Distanz des Füllstandmessgeräts zum Medium kann durch eine einzelne Messung erfolgen, bei der das Sendesignal in die erste Richtung senkrecht zur Fließrichtung des Mediums und davor, danach oder gleichzeitig in die zweite Richtung schräg zur Fließrichtung des Mediums abgestrahlt wird.

De Abstrahlung des Sendesignals erfolgt demnach zunächst in zwei verschiedene Richtungen, gefolgt von einer Auswertung der entsprechenden, an der Oberfläche des Füllmediums reflektierten Signale, welche die Bestimmung der Fließgeschwindigkeit und der Distanz (Füllstand bzw. Pegel) ermöglicht.

Neben der gleichzeitigen Abstrahlung des Sendesignals in die zwei verschiedenen Richtungen ist es auch möglich, zunächst das Sendesignal in die erste Richtung abzustrahlen und daraufhin in die zweite Richtung (oder umgekehrt).

Die Bestimmung von Distanz und Fließgeschwindigkeit kann sequenziell oder parallel erfolgen, je nach Ausführungsform des Füllstandmessgeräts.

Auch kann vorgesehen sein, dass sich der Messzyklus wie folgt definiert: Die Distanz wird mehrmals gemessen, indem zeitlich aufeinanderfolgende Sendesignale in die erste Richtung abgestrahlt und die entsprechend reflektierten Signale ausgewertet werden. Die Auswertung des schräg zur Fließrichtung des Mediums abgestrahlten Sendesignals erfolgt jedoch weniger oft, beispielsweise nur nach jeder zehnten oder zwanzigsten Messung der Distanz. Dies kann bedeuten, dass das Sendesignal in die zweite Richtung auch nur dann abgestrahlt wird, wenn eine bestimmte Anzahl an Distanzmessungen erfolgt ist oder wenn eine bestimmte Zeit seit der letzten Fließgeschwindigkeitsbestimmung vergangen ist (beispielsweise eine Minute).

Es ist aber auch möglich, dass das Sendesignal öfter in die zweite Richtung abgestrahlt wird, das entsprechende reflektierte Signal, das aus dieser Richtung von der Antennenanordnung aufgenommen wird, jedoch nur dann auch ausgewertet wird (um die Fließgeschwindigkeit zu bestimmen), wenn eine bestimmte Anzahl von Füllstandmessungen erfolgt ist oder eine bestimmte Zeit seit der letzten Fließgeschwindigkeitsbestimmung vergangen ist (beispielsweise eine oder zwei Minuten).

Es kann demnach vorgesehen sein, dass die Bestimmung der Fließgeschwindigkeit durch ein bestimmtes Ereignis getriggert wird. Hierbei kann es sich, wie bereits beschrieben, um die Durchführung einer bestimmten Anzahl an Distanzmessungen und/oder den Ablauf einer bestimmten Zeit seit der letzten Fließgeschwindigkeitsbestimmung handeln. Alternativ oder zusätzlich kann es sich bei dem die Fließgeschwindigkeitsbestimmung auslösenden Ereignis aber auch darum handeln, dass sich der Pegelstand (also die "Distanz") während einer vorbestimmten Zeit um mehr als einen vorbestimmten Schwellwert geändert hat. In anderen Worten wird gemäß dieser Ausführungsform eine Fließgeschwindigkeitsmessung dann getriggert, wenn sich die Distanz schnell genug ändert.

Gemäß einer weiteren Ausführungsform der Erfindung ist das Füllstandmessgerät als Füllstandradar ausgeführt. Insbesondere kann das Messgerät zum Anschluss an eine 4...20mA Zweidraht-Leitung ausgeführt sein, über welche es gleichzeitig mit Energie beliefert wird und einen Messwert übertragen kann, der proportional zum fließenden Strom ist. Auch die Kommunikation kann über die Zweidraht-Leitung erfolgen.

Gemäß einem weiteren Aspekt der Erfindung ist ein Verfahren zum Bestimmen einer Distanz zu einem Medium sowie einer Fließgeschwindigkeit des Mediums durch Auswerten eines von einem Messgerät abgestrahlten und von dem Medium reflektierten Sendesignals angegeben. Zunächst wird ein Sendesignal erzeugt, welches während eines ersten Zeitintervalls eine Amplitudenmodulation oder eine Frequenzmodulation aufweist und welches während eines zweiten Zeitintervalls keine Modulation aufweist. Danach erfolgt ein Abstrahlen des Sendesignals in eine erste Richtung schräg zur Fließrichtung des Mediums. Es kann darüber hinaus vorgesehen sein, das Sendesignal in eine zweite Richtung abzustrahlen, die im Wesentlichen senkrecht zur Fließrichtung des Mediums steht. Daraufhin erfolgt das Bestimmen der Distanz zum Medium sowie der Fließgeschwindigkeit des Mediums durch Auswertung des von dem Medium reflektierten und von der Antennenanordnung aufgenommenen Sendesignals.

Somit ist es möglich, mit einem einzigen FMCW-Sensor die Entfernung (durch Frequenzmodulation des Sendesignals) und die Geschwindigkeit des Gewässers unter Auswertung des Dopplereffekts zu bestimmen.

Gemäß einem weiteren Aspekt der Erfindung ist ein Programmelement angegeben, das, wenn es auf einer Prozessoreinheit eines Messgeräts ausgeführt wird, das Messgerät anleitet, die oben und im Folgenden beschriebenen Schritte auszuführen.

Gemäß einem weiteren Aspekt der Erfindung ist ein computerlesbares Medium angegeben, auf dem ein Programmelement gespeichert ist, das, wenn es auf einer Prozessoreinheit eines Messgeräts ausgeführt wird, das Messgerät anleitet, die oben und im Folgenden beschriebenen Schritte durchzuführen.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Messgerät gemäß einem Ausführungsbeispiel der Erfindung.
Fig. 2 zeigt ein Messgerät gemäß einem weiteren Ausführungsbeispiel der Erfindung.
Fig. 3 zeigt ein Messgerät gemäß einem weiteren Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

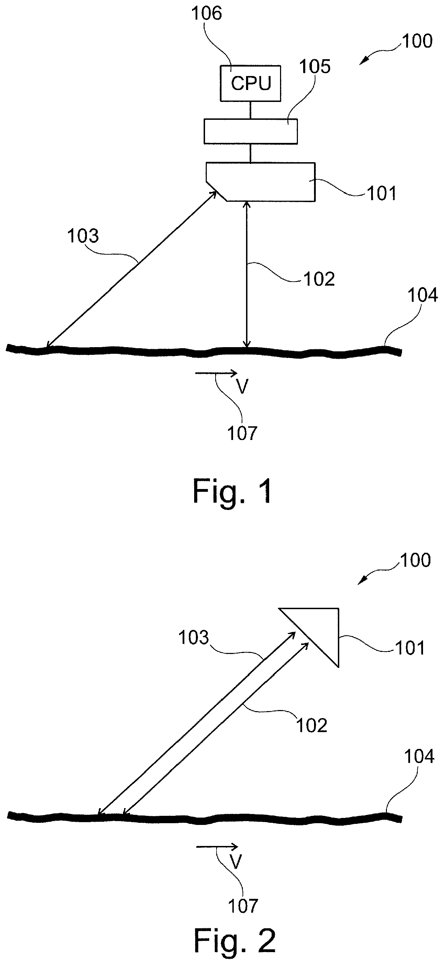

Fig. 1 zeigt ein Messgerät 100 gemäß einem Ausführungsbeispiel der Erfindung. Bei dem Messgerät handelt es sich um ein Distanzmessgerät, beispielsweise in Form eines Füllstandradars.

Die Messung der Fließgeschwindigkeit des Mediums, bei dem es sich um ein Fluid handelt, und der Distanz zum Sensor 100 sind in einem einzigen Messsgerät, beispielsweise einem FMCW-Radarsystem, kombiniert. Entweder weist das Messgerät zwei Antennen auf oder eine einzelne Antenne. Das Messgerät 100 der Fig. 1 ist ausgeführt, ein erstes Sendesignal in eine Richtung 103 abzustrahlen, die schräg zur Fließrichtung 107 des Mediums 104 steht. Darüber hinaus ist die Antennenanordnung des Messgeräts 100 ausgeführt, einen anderen Teil des Sendesignals in Richtung 102 abzustrahlen, die senkrecht auf der Fließrichtung 107 des Mediums 104 steht.

Das Sendesignal wird dann zumindest teilweise an der Oberfläche des Mediums reflektiert. Da die Oberfläche des Mediums eine leichte Kräuselung oder Wellenbildung aufweisen kann, kann aus dem schräg abgestrahlten, an der Oberfläche des Mediums reflektierten und von der Antennenanordnung 101 aufgenommenen Sendesignal unter Berücksichtigung des Dopplereffekts die Fließgeschwindigkeit des Mediums bestimmt werden. Das in die Richtung 102 abgestrahlte Sendesignal kann nach dessen Reflexion an der Oberfläche des Mediums und Aufnahme durch die Antennenanordnung 101 zur Entfernungsmessung herangezogen werden.

Bei Verwendung von zwei getrennten Antennen in der Antennenanordnung 101 können mit einem Umschalter abwechselnd die Distanz und die Fließgeschwindigkeit des Mediums gemessen werden.

Im Übrigen kann es sich bei der Antennenanordnung 101 um eine Einzelantenne handeln, die mehrere Hauptabstrahlrichtungen 102, 103 aufweist.

Hierdurch ergibt sich ein einfacher Aufbau zur Messung der Distanz zu einer Oberfläche des Mediums und zur gleichzeitigen (oder darauffolgenden) Messung der Fließgeschwindigkeit und ggf. auch der Fließrichtung des Mediums. Auch kann die Durchflussmenge mit einem solchen Messgerät bestimmt werden, wenn die Geometrie des Fließbetts der Flüssigkeit bekannt ist.

Das Messgerät 100 weist eine Prozessoreinheit 106 auf, die an das HF-Modul 105 (Sendesignalerzeugungseinheit) angeschlossen ist. Das HF-Modul ist über eine Signalleitung an die Antennenanordnung 101 angeschlossen. Die Antennenanordnung 101 kann sich an einem Gehäuse befinden und es kann vorgesehen sein, dass sich die Antennenanordnung gegen das HF-Modul verdrehen lässt.

Die Antennenanordnung 101 strahlt also ein Sendesignal ab, wobei ein verhältnismäßig großer Anteil des Sendesignals in der Richtung 103 schräg zur Fließgeschwindigkeit 107 des Fluids 104 gerichtet ist. Zumindest ein Teil dieses schräg abgestrahlten Signalanteils wird von der Oberfläche des fließenden Fluids reflektiert und in Richtung 103 an die Antennenanordnung zurückgesendet. Die Antennenanordnung nimmt dann diesen reflektierten Signalanteil des Sendesignals auf.

Nach dieser Messung (oder davor) wird ein zweiter, unter Umständen geringerer Signalanteil senkrecht zur Fließgeschwindigkeit 107 des Fluids 104 in Richtung 102 abgestrahlt, an der Oberfläche des Fluids reflektiert und in umgekehrter Richtung zurück zur Antenne gestrahlt. Die Antenne nimmt dann diesen Signalanteil des reflektierten Sendesignals auf.

Aus den aufgenommenen, reflektierten Sendesignalanteilen wird dann eine Echokurve erzeugt, aus welcher die Distanz zur Oberfläche des Fluids sowie die Fließgeschwindigkeit (durch eine Dopplerauswertung des schräg zur Fließrichtung abgestrahlten Sendesignalanteils) erfolgt.

Bei der Verwendung eines FMCW-Radarverfahrens zur Entfernungsmessung ist es möglich, mit dem selben Mikrowellensystem 105 auch ein CW-Signal zu erzeugen, um die Geschwindigkeit z. B. des fließenden Gewässers zu erfassen.

Bei der Messung der Entfernung wird über ein frequenzmoduliertes Dauerstrichsignal (FMCW-Signal) eine Differenzfrequenz zwischen dem gesendeten und empfangenen Signal ermittelt. Die Differenzfrequenz ist proportional der Entfernung zur Wasseroberfläche. Über eine detaillierte Auswertung der Reflexionssignale mithilfe einer FFT-Analyse (FFT: Fast Fourier Transformation) können verschiedene Reflexionen ermittelt werden.

Die Geschwindigkeit eines Objekts kann mithilfe eines Dauerstrichsignals (CW-Signal) ermittelt werden. Ein Mikrowellensignal trifft dabei auf ein bewegtes Objekt. Durch die Bewegung ergibt sich eine Dopplerverschiebung des reflektierten Signals im Vergleich zum Sendesignal. Die Differenzfrequenz ist direkt proportional zur Geschwindigkeit. Besonders interessant ist dabei, dass für die Entfernungsmessung und die Geschwindigkeitsmessung dieselbe Elektronik verwendet werden kann, während der Geschwindigkeitsmessung ist keine Modulation des Sendesignals notwendig.

Bei einer senkrechten Anordnung ist ein zweites, leicht schräg angeordnetes Antennensystem zur Geschwindigkeitsmessung sinnvoll (vgl. Fig. 1).

Wird der Sensor zur Messung schräg angeordnet (siehe Fig. 2) ist nur ein Antennensystem erforderlich, das in eine einzige Richtung abstrahlt, um die Entfernung und die Geschwindigkeit zu erfassen. Dabei können allerdings Ungenauigkeiten bei der Entfernungsmessung auftreten. In diesem Fall werden sowohl das FMCW-Signal als auch das CW-Signal in dieselbe Richtung schräg zur Fließrichtung 107 des Gewässers abgestrahlt.

Integration weiterer Sensoren: In einigen Anwendungen sind weitere Messwerte erforderlich. So kann z. B. die Umgebungstemperatur von Interesse sein. Ein Temperatursensor kann in dem Messgerät integriert sein. Auch ist der Anschluss von weiteren Sensoren in einigen Ausführungsbeispielen der Erfindung vorgesehen, um Windgeschwindigkeit, Ozonwerte oder dergleichen zu erfassen.

Speicherung der Messwerte und Datenübertragung: Damit nicht ein getrennter Datenspeicher notwendig ist, kann ein entsprechender Speicher in dem Messgerät integriert sein. Die gesammelten Daten können in zyklischen Abständen mit einem GSM-Modul oder über bestehende digitale Datenübertragungssysteme an eine Zentrale übertragen werden.

Anwendungsbereiche der Erfindung sind die Messung von Flusspegeln, auch bei Rückstau, die Durchflussmessung in Kanalnetzen für Abwasser, Kühlwasser, ..., sowie die Tidenmessung an Küsten und im Offshorebereich mit Strömungsinformationen.

Insbesondere kann vorgesehen sein, dass eine einzige Elektronik sowohl für die Mikrowellentechnik als auch für die weitere Signalverarbeitung zur Messung des Pegelstandes und der Fließgeschwindigkeit des Gewässers verwendet wird.

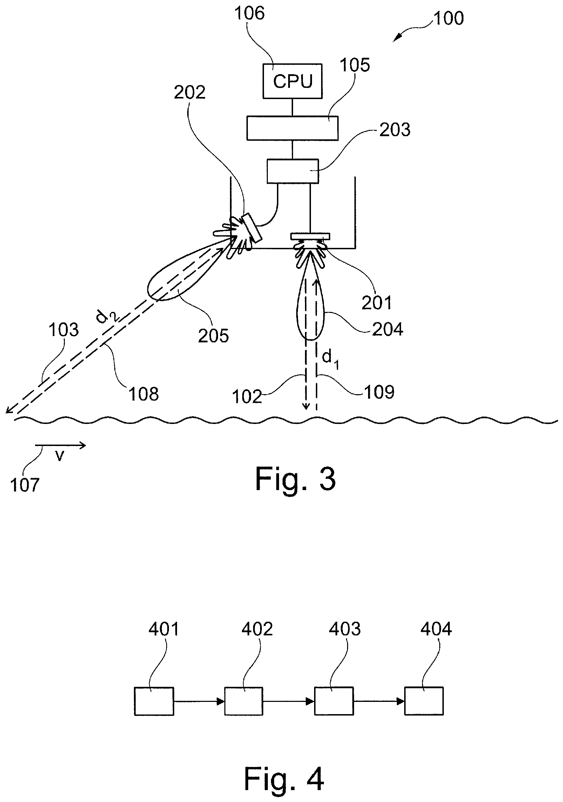

Fig. 3 zeigt ein Messgerät 100 gemäß einem weiteren Ausführungsbeispiel der Erfindung. Im Vergleich zum Ausführungsbeispiel der Fig. 2 sind zwei Antennen 201, 202 vorgesehen, welche jeweils über eine eigene Signalleitung an einen Richtkoppler, einen Leistungssplitter oder einen Umschalter 203 angeschlossen sind, der die beiden Antennen mit dem HF-Modul 105 verbindet.

Es ist also ein FMCW-Modul für beide Messungen (Distanz und Fließgeschwindigkeit) vorgesehen, welches mit je einer Antenne für die Distanzmessung und einer anderen Antenne für die Fließgeschwindigkeit über einen Umschalter, einen Powersplitter oder Richtkoppler gekoppelt ist. Über den Umschalter kann jeweils eine der beiden Antennen zur Messung ausgewählt werden. Somit sind abwechselnde Messungen von Distanz und Fließgeschwindigkeit möglich. Die Umschaltung zwischen beiden Messverfahren erfolgt auf dem HF-Signalpfad zwischen der Antenne und dem HF-Modul 105.

Auch kann, wie bereits beschrieben, das HF-Modul mit den beiden Antennen über einen Richtkoppler oder Powersplitter 203 verbunden sein, wie dies in der Fig. 3 schematisch gezeigt ist. Für beide Messungen wird hier jeweils eine optimierte Antenne eingesetzt. Die Antenne 201 strahlt das Sendesignal senkrecht zur Fließrichtung 107 ab, wie dies durch die Sendekeule 204 symbolisiert ist. Die zweite Antenne 202, welche schräg zur ersten Antenne 201 angeordnet ist, strahlt das Sendesignal in die schräge Richtung 103 ab, wie dies durch die Sendekeule 205 symbolisiert ist.

Durch die Verwendung von zwei getrennten Antennen können größere Amplituden der beiden Empfangssignale erreicht werden. Die Auswertung erfolgt wie in den anderen Ausführungsbeispielen.

Fig. 4 zeigt ein Flussdiagramm eines Verfahrens gemäß einem Ausführungsbeispiel der Erfindung.

In Schritt 402 erzeugt ein Signalerzeugungsmodul ein Sendesignal, welches in Schritt 402 schräg zur Fließrichtung eines Gewässers abgestrahlt wird, und zwar in Form eines CW-Signals. In Schritt 403 wird das Sendesignal dann senkrecht zur Fließrichtung des Gewässers abgestrahlt, und zwar in Form eines frequenzmodulierten Signals (FMCW). In Schritt 404 werden die von der Antennenanordnung empfangenen, reflektierten Signale ausgewertet und es werden daraus die Fließgeschwindigkeit sowie der Pegelstand des Mediums berechnet.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (100) zur Bestimmung einer Distanz zu einem Medium sowie einer Fließgeschwindigkeit des Mediums durch Auswertung eines von dem Füllstandmessgerät abgestrahlten und von dem Medium reflektierten Sendesignals, das Füllstandmessgerät aufweisend:
ein Signalerzeugungsmodul (105) zur Erzeugung des Sendesignals, welches während eines ersten Zeitintervalls eine Amplitudenmodulation oder eine Frequenzmodulation aufweist und welches während eines zweiten Zeitintervalls keine Modulation aufweist;
eine Antennenanordnung (101) zum Abstrahlen des Sendesignals in eine erste Richtung (103) schräg zur Fließrichtung (107) des Mediums;
eine Prozessoreinheit (106) zur Bestimmung der Distanz zum Medium sowie der Fließgeschwindigkeit des Mediums durch Auswertung des von dem Medium reflektierten und von der Antennenanordnung aufgenommenen Sendesignals;
wobei die Antennenanordnung (101) zum Abstrahlen des Sendesignals in eine zweite Richtung (102), die senkrecht zur Fließrichtung (107) des Mediums ist, ausgeführt ist.

2. Füllstandmessgerät nach Anspruch 1,
wobei die Antennenanordnung (101) eine einzelne Antenne mit zwei oder mehr Abstrahlrichtungen ist.

3. Füllstandmessgerät nach Anspruch 1,
wobei die Antennenanordnung (101) eine erste Antenne und eine zweite Antenne aufweist;
wobei die erste Antenne zum Abstrahlen des Sendesignals in die erste Richtung (103) und die zweite Antenne zum Abstrahlen des Sendesignals in die zweite Richtung (102) ausgeführt ist.

4. Füllstandmessgerät nach Anspruch 3,
wobei die zwei Antennen beide über einen Richtkoppler, einen Umschalter oder einen Leistungssplitter an das Signalerzeugungsmodul (105) angeschlossen sind.

5. Füllstandmessgerät nach einem der vorhergehenden Ansprüche,
wobei die Antennenanordnung ein planares Antennenarray aufweist.

6. Füllstandmessgerät nach einem der vorhergehenden Ansprüche,
wobei das Signalerzeugungsmodul (105) ein FMCW-Modul ist, welches das frequenzmodulierte Sendesignal in Form eines FMCW-Signals während des ersten Zeitintervalls erzeugt, und welches das unmodulierte Sendesignal in Form eines CW-Signals während des zweiten Zeitintervalls erzeugt.

7. Füllstandmessgerät nach Anspruch 6,
wobei das Füllstandmessgerät (100) ausgeführt ist, das Sendesignal während des ersten Zeitintervalls nur in die erste Richtung und das Sendesignal während des zweiten Zeitintervalls nur in die zweite Richtung abzustrahlen.

8. Füllstandmessgerät nach einem der vorhergehenden Ansprüche,
wobei die Prozessoreinheit (106) zur Bestimmung der Distanz zum Medium sowie der Fließgeschwindigkeit des Mediums innerhalb eines einzigen Messzyklus ausgeführt ist.

9. Füllstandmessgerät nach einem der vorhergehenden Ansprüche, ausgeführt als Füllstandradar.

10. Füllstandmessgerät nach einem der vorhergehenden Ansprüche, ausgeführt als 2-Leiter Sensor.

11. Verfahren zum Bestimmen einer Distanz zu einem Medium sowie einer Fließgeschwindigkeit des Mediums durch Auswerten eines von einem Messgerät abgestrahlten und von dem Medium reflektierten Sendesignals, das Verfahren aufweisend die Schritte:
Erzeugen eines Sendesignals, welches während eines ersten Zeitintervalls eine Amplitudenmodulation oder eine Frequenzmodulation aufweist und welches während eines zweiten Zeitintervalls keine Modulation aufweist;
Abstrahlen des Sendesignals in eine erste Richtung (103) schräg zur Fließrichtung (107) des Mediums und in eine zweite Richtung (102) senkrecht zur Fließrichtung (107) des Mediums;
Bestimmen der Distanz zum Medium sowie der Fließgeschwindigkeit des Mediums durch Auswertung des von dem Medium reflektierten und von der Antennenanordnung aufgenommenen Sendesignals.

12. Programmelement, das, wenn es auf einer Prozessoreinheit (105) eines Füllstandmessgeräts ausgeführt wird, das Füllstandmessgerät anleitet, die Schritte nach Anspruch 11 auszuführen.

13. Computerlesbares Medium, auf dem ein Programmelement gespeichert ist, das, wenn es auf einer Prozessoreinheit (105) eines Füllstandmessgeräts ausgeführt wird, das Füllstandmessgerät anleitet, die Schritte nach Anspruch 11 auszuführen.

## Claims

1. Fill level measurement device (100) for determining a distance from a medium and a flow speed of the medium by evaluating a transmission signal emitted by the fill level measurement device and reflected by the medium, the fill level measurement device comprising:
a signal generator module (105) for generating the transmission signal, which has an amplitude modulation or a frequency modulation during a first time interval and which has no modulation during a second time interval;
an antenna arrangement (101) for emitting the transmission signal in a first direction (103) oblique to the flow direction (107) of the medium;
a processor unit (106) for determining the distance from the medium and the flow speed of the medium by evaluating the transmission signal reflected by the medium and received by the antenna arrangement,
wherein the antenna arrangement (101) is configured to emit the transmission signal in a second direction (102) which is perpendicular to the flow direction (107) of the medium.

2. Fill level measuring device according to claim 1, wherein the antenna arrangement (101) is a single antenna having two or more radiation directions.

3. Fill level measuring device according to claim 1, wherein the antenna arrangement (101) comprises a first antenna and a second antenna, wherein the first antenna is configured to emit the transmission signal in the first direction and the second antenna is configured to emit the transmission signal in the second direction.

4. Fill level measurement device according to claim 3, wherein the two antennas are both connected to the signal generator module (105) via a directional coupler, a switch or a power splitter.

5. Fill level measurement device according to any one of the preceding claims, wherein the antenna arrangement comprises a planar antenna array.

6. Fill level measurement device according to any one of the preceding claims, wherein the signal generator module (105) is an FMCW module, which generates the frequency-modulated transmission signal in the form of an FMCW signal during the first time interval, and which generates the unmodulated transmission signal in the form of a CW signal during the second time interval.

7. Fill level measurement device according to claim 6, wherein the fill level measurement device is configured to transmit the transmission signal only in the first direction during the first time interval and to transmit the transmission signal only in the second direction during the second time interval.

8. Fill level measurement device according to any one of the preceding claims, wherein the processor unit (106) is configured to determine the distance from the medium and the flow speed of the medium within a single measurement cycle.

9. Fill level measurement device according to any one of the preceding claims, configured as a fill level radar.

10. Fill level measurement device according to any one of the preceding claims, configured as a 2-wire line sensor.

11. Method for determining a distance from a medium and a flow speed of the medium by evaluating a transmission signal emitted by a measurement device and reflected by the medium, the method comprising the steps of:
generating a transmission signal which has an amplitude modulation or a frequency modulation during a first time interval and which has no modulation during a second time interval;
emitting the transmission signal in a first direction (103) oblique to the flow direction (107) of the medium and in a second direction (102) perpendicular to the flow direction (107) of the medium;
determining the distance from the medium and the flow speed of the medium by evaluating the transmission signal reflected by the medium and received by the antenna arrangement.

12. Program element which, when executed on a processor unit (105) of a fill level measurement device, causes the fill level measurement device to carry out the steps according to claim 11.

13. Computer-readable medium on which a program element is stored which, when executed on a processor unit (105) of a fill level measurement device, causes the fill level measurement device to carry out the steps according to claim 11.

## Revendications

1. Appareil de mesure de niveau (100) pour la détermination d'une distance par rapport à un fluide, ainsi que d'une vitesse d'écoulement du fluide, par évaluation d'un signal d'émission émis par l'appareil de mesure de niveau et réfléchi par le fluide, l'appareil de mesure de niveau comprenant :
un module de génération de signaux (105) pour générer le signal d'émission, lequel présente pendant une première période une modulation d'amplitude ou une modulation de fréquence et ne présente aucune modulation pendant une seconde période;
un agencement d'antenne (101) pour émettre le signal d'émission dans une première direction (103) en oblique par rapport à la direction d'écoulement (107) du fluide ;
une unité de processeur (106) pour la détermination de la distance par rapport au fluide, ainsi que de la vitesse d'écoulement du fluide, par évaluation du signal d'émission réfléchi par le fluide et reçu par l'agencement d'antenne ;
l'agencement d'antenne (101) étant réalisé pour émettre le signal d'émission dans une seconde direction (102), perpendiculaire à la direction d'écoulement (107) du fluide.

2. Appareil de mesure de niveau selon la revendication 1,
l'agencement d'antenne (101) étant une antenne individuelle avec deux ou plusieurs directions d'émission.

3. Appareil de mesure de niveau selon la revendication 1,
l'agencement d'antenne (101) présentant une première antenne et une seconde antenne ;
la première antenne étant réalisée pour émettre le signal d'émission dans la première direction (103) et la seconde antenne pour émettre le signal d'émission dans la seconde direction (102).

4. Appareil de mesure de niveau selon la revendication 3,
les deux antennes étant raccordées au module de génération de signaux (105) par l'intermédiaire d'un coupleur directionnel, d'un commutateur ou d'un diviseur.

5. Appareil de mesure de niveau selon l'une des revendications précédentes,
l'agencement d'antenne étant un réseau d'antennes planes.

6. Appareil de mesure de niveau selon l'une des revendications précédentes,
le module de génération de signaux (105) étant un module FMCW, qui génère le signal d'émission modulé en fréquence en forme d'un signal FMCW pendant la première période, et génère le signal d'émission non modulé en forme d'un signal CW pendant la seconde période.

7. Appareil de mesure de niveau selon la revendication 6,
l'appareil de mesure de niveau (100) étant réalisé pour n'émettre le signal d'émission que dans la première direction pendant la première période et pour n'émettre le signal d'émission que dans la seconde direction pendant la seconde période.

8. Appareil de mesure de niveau selon l'une des revendications précédentes,
l'unité de processeur (106) étant réalisée pour déterminer la distance par rapport au fluide, ainsi que la vitesse d'écoulement du fluide, à l'intérieur d'un cycle de mesure unique.

9. Appareil de mesure de niveau selon l'une des revendications précédentes, réalisé sous forme de radar de niveau.

10. Appareil de mesure de niveau selon l'une des revendications précédentes, réalisé sous forme de capteur à deux conducteurs.

11. Procédé de détermination d'une distance par rapport à un fluide, ainsi que d'une vitesse d'écoulement du fluide, par évaluation d'un signal d'émission émis par un appareil de mesure et réfléchi par le fluide, le procédé comprenant les étapes :
génération d'un signal d'émission, qui présente pendant une première période une modulation d'amplitude ou une modulation de fréquence et ne présente aucune modulation pendant une seconde période ;
émission du signal dans une première direction (103) en oblique par rapport à la direction d'écoulement (107) du fluide et dans une seconde direction (102) perpendiculaire à la direction d'écoulement (107) du fluide ;
détermination de la distance par rapport au fluide, ainsi que de la vitesse d'écoulement du fluide, par évaluation du signal d'émission réfléchi par le fluide et reçu par l'agencement d'antenne.

12. Elément de programme qui, lorsqu'il est exécuté sur une unité de processeur (105) d'un appareil de mesure de niveau, donne l'ordre à l'appareil de mettre en oeuvre les étapes selon la revendication 11.

13. Support lisible sur ordinateur, sur lequel est mémorisé un élément de programme qui, lorsqu'il est exécuté sur une unité de processeur (105) d'un appareil de mesure de niveau, donne l'ordre à l'appareil de mettre en oeuvre les étapes selon la revendication 11.
